# EUROPÄISCHE PATENTSCHRIFT

(11) **EP 2 799 966 B1**
(45) Veröffentlichungstag und Bekanntmachung des Hinweises auf die Patenterteilung: **26.10.2022**
(21) Anmeldenummer: 13166169.6
(22) Anmeldetag: 02.05.2013
(51) Int. Cl.: G06F 3/045, G06F 3/041

(54) **Eingabevorrichtung, Kontrolleinheit und Verfahren zur Positionsbestimmung**
Input device, control unit and method for detecting position
Dispositif d'entrée, unité de contrôle et procédé de détermination de position

(43) Veröffentlichungstag der Anmeldung: 05.11.2014
(73) Patentinhaber: Siemens Aktiengesellschaft, 80333 München (DE)
(72) Erfinder: von Hase, Paul, 90429 Nürnberg (DE)

(56) Entgegenhaltungen:
- US-A- 5 225 636
- US-B1- 6 208 332

## Beschreibung

Die Erfindung betrifft eine Eingabevorrichtung mit einer ersten elektrisch leitfähigen Fläche und einer zweiten elektrisch leitfähigen Fläche, welche in einem Abstand voneinander angeordnet sind, dabei ist die erste elektrisch leitfähige Fläche als eine Bedienfläche ausgestaltet und derart beschaffen, dass ein Druck an einen Berührpunkt die erste Fläche im Berührpunkt derart verformt, dass sich die erste Fläche und die zweite Fläche im Berührpunkt kontaktieren, wobei dadurch ein Positionswert ermittelt werden kann.

Zusätzlich betrifft die Erfindung ein Verfahren zur Positionsbestimmung einer Position eines Berührpunktes auf einer Bedienfläche einer Eingabevorrichtung.

Aus der Offenlegungsschrift EP 1 770 480 A2 ist eine Eingabevorrichtung, eine Kontrolleinheit und ein Verfahren bekannt.

Die US 6 208 332 B1 zeigt die Nutzung einer Eingabevorrichtung mit einem Sensor mit 4-Draht Touch Technik. Die US 5 225 636 A zeigt eine Eingabevorrichtung gemäß der Merkmalskombinationen der Oberbegriffe der unabhängigen Patentansprüche.

Als Eingabevorrichtung wird im Sinne der Erfindung insbesondere ein resistiver Touch-Sensor angesehen, wobei sich die Erfindung mit einer bisher bestehenden Schwäche bei resistiven Touch-Sensoren beschäftigt. Die Schwäche der bisher bekannten resistiven Touch-Sensoren hat ihren Ursprung in einen Übergangswiderstand und einer Kapazität zwischen den beiden elektrisch leitfähigen Flächen.

Ein einfacher resistiver Touch-Sensor umfasst zwei elektrisch leitfähige Flächen, die in sehr geringem Abstand zueinander elektrisch isoliert montiert sind und sich ohne mechanischen Druck nicht berühren.

Vorzugsweise wird die hintere Fläche mit einer Glas- oder Kunststoffplatte realisiert, während die vordere Fläche aus einer Polyesterfolie besteht. Zwischen den zwei Flächen befinden sich gleichmäßig angeordnete sogenannte Spacer, winzige Kügelchen, welche verhindern, dass die Folie im unbetätigten Zustand die Platte berührt. Die zueinander gewandten Seiten der Platte und der Folie sind vorzugsweise mit einer elektrisch leitenden, durchsichtigen ITO-Schicht versehen. Wird z.B. mit einem Finger einer menschlichen Hand oder einem Stift auf die Folie ein ausreichend hoher Druck ausgeübt, berührt die Folie trotz der Spacer die darunter liegende Platte. An dieser Stelle entsteht ein mehr oder weniger gut elektrisch leitender Übergang zwischen den zwei Flächen.

Ausgehend von einem X-, Y-Koordinatensystem und einer X-Achse und einer Y-Achse, wird zur Ermittlung eines Positionswertes eine Achse an die einer Achse zugeordneten Zuleitung der entsprechenden Platte eine feste Spannung angelegt. Das so entstehende Spannungspotential verteilt sich entsprechend dem ohmschen Gesetz zwischen dem mit der Spannung beaufschlagten Enden der Platte. Die Höhe der elektrischen Spannung an einen bestimmten Punkt auf der Platte ist somit ein Maß für die eindimensionale Position des Punktes auf der Achse der Platte. Wird ein mechanischer Druck auf die äußere Platte (Folie) ausgeübt, entsteht an dieser Stelle eine elektrische Verbindung zwischen den zwei Flächen. Durch diese Verbindung wird die Fläche, an der keine feste Spannung angelegt ist, auf das Potential umgeladen, welche die mit der Spannungsquelle verbundene Fläche genau an diesen Berührpunkt hat.

Die Fläche, welche das Potential annimmt, wird in Fachkreisen auch "Wiper", entsprechend dem englischen Namen für einen Schleifer eines Potentiometers, genannt. Die am Wiper anliegende Spannung entspricht somit der Position auf der entsprechenden Koordinatenachse.

Es gibt unterschiedliche elektrische Eigenschaften eines Touch-Sensors, die bei der Ermittlung der Koordinate störend wirken. Der ohmsche Übergangswiderstand, der sich bei der Berührung der zwei Flächen einstellt, ist eine bedeutende elektrische Eigenschaft und zudem ist dieser Übergangswiderstand druckabhängig. Weiterhin entsprechen die zwei elektrisch leitfähigen Flächen, welche den Touch-Sensor bilden, einem Kondensator. Folglich haben sie zueinander eine nicht zu vernachlässigende Kapazität. Hinzu kommt eine Kapazität der Verschaltung, z.B. einer Befilterung, einer Kapazität von Zuleitungen, eine Kapazität von Elektronikbauteilen auf einen Touch-Controller. Diese Kapazitäten sollen zusammengefasst als eine Gesamtkapazität betrachtet werden.

Um eine Zuverlässigkeit der ermittelten Messwerte zu verbessern, wird bei dem Stand der Technik beispielsweise eine Koordinatenmessung erst durchgeführt, wenn ein vermeintlich ausreichend hoher Druck auf dem Touch-Sensor ausgeübt wurde. Dazu wird vor und/oder nach der Koordinatenmessung der Übergangswiderstand gemessen (Z-Messung). Liegt dieser gemessene Übergangswiderstand über einer festgelegten Schwelle, wird die Messung nicht gestartet bzw. verworfen, weil der Druck nicht ausreichend war und es somit zu einer Fehlmessung kommen könnte.

Diese Vorgehensweise hat allerdings zwei Nachteile. Zum Einen erfolgt die Messung des Anpressdruckes zeitlich nicht während der Ermittlung der Koordinaten, sondern im besten Fall kurz davor und/oder kurz danach. Besonders bei einem Ziehen eines Bedienobjektes über den Touch-Sensor verändert sich der Anpressdruck des Bedienobjektes auf den Touch-Sensor sehr schnelle. Die gemessenen Werte gelten somit nur bedingt für den Zeitraum während dessen die Koordinaten ermittelt wurden. Zum Anderen muss die Schwelle ausreichend hoch gelegt werden, damit ein Messwert auch zuverlässig ermittelt werden kann.

Aber, je höher die Schwelle gelegt ist, umso unempfindlicher wird der Touch-Sensor, da er nach einem höheren Anpressdruck verlangt.

Eine zusätzliche Vorgehensweise besteht darin, die neu ermittelte Koordinate mit solchen Koordinatenwerten aus der nahen Vergangenheit zu vergleichen, welche bereits als richtig eingestuft wurden. Nur wenn sich der neue Wert plausibel in die Reihe der alten Werte einfügt, wird er übernommen, ansonsten wird er verworfen.

Dieses Vorgehen birgt allerdings ein großes Problem. Da eine Koordinatenmessung grundsätzlich sehr schnell hintereinander durchgeführt wird, ändern sich die sonstigen Gegebenheiten zwischen zwei Messungen ebenfalls kaum. Die Wahrscheinlichkeit ist somit sehr groß, dass hintereinander durchgeführte Falschmessungen auf ein falsches, aber dennoch ähnliches Ergebnis kommen. Somit werden diese Ergebnisse fälschlicher Weise als plausibel und somit als richtig eingestuft.

Aufgabe der Erfindung ist es, die Ermittlung von Messwerten, insbesondere Spannungswerten zur Positionsermittlung zu verbessern, und dadurch eine erhöhte Zuverlässigkeit bei einer Eingabevorrichtung zu erreichen.

Die Aufgabe wird durch eine Eingabevorrichtung gelöst, mit einer ersten elektrisch leitfähigen Fläche und einer zweiten elektrisch leitfähigen Fläche, welche in einem Abstand voneinander angeordnet sind, dabei ist die erste elektrisch leitfähige Fläche als eine Bedienfläche ausgestaltet und derart beschaffen, dass ein Druck an einen Berührpunkt die erste Fläche im Berührpunkt derart verformt, dass sich die erste Fläche und die zweite Fläche im Berührpunkt kontaktieren und ein Stromweg über einen Teil der ersten Fläche bis zu den Berührpunkt und von dem Berührpunkt über einen Teil der zweiten Fläche entsteht, weiterhin mit einer Auswerteeinheit, welche ausgestaltet ist einen Spannungswert längs des Stromweges zu messen und daraus einen Positionswert zu bestimmen, einem Stromanschaltemittel, welches mit der ersten Fläche in Verbindung steht, wobei die Auswerteeinheit und das Stromanschaltemittel derart ausgestaltet sind, dass sie in Bezug auf einen Zeitpunkt einer Spannungswertmessung der Auswerteeinheit miteinander synchronisiert sind, wobei das Stromanschaltemittel ausgestaltet ist vor dem Zeitpunkt einer Spannungswertmessung einen Strom in die erste Fläche einzuprägen um die erste Fläche von einem ersten elektrischen Potential auf ein zweites elektrisches Potential umzuladen.

Durch die vorliegende Erfindung können Positionswerte fehlerfrei ermittelt werden, ohne dass sich die durch die fehlerfreie Ermittlung gewonnene Störsicherheit negativ auf die Empfindlichkeit der Eingabevorrichtung, also beispielsweise der Leichtgängigkeit eines Touch-Sensors, auswirken würde. Nach dem Stand der Technik stand eine erhöhte Touch-Sensorempfindlichkeit unter Beibehaltung einer Störsicherheit im Kontrast zu anderen Verfahren, bei denen eine Messung nur dann durchgeführt bzw. ausgeführt wurde, wenn die Übergangswiderstandsmessung einen Schwellwert unterschreitet, der einen hinreichend hohen Anpressdruck suggeriert. Bei dieser Erfindung hingegen ist es nicht mehr notwendig, den Anpressdruck zu ermitteln. Ausgehend von einem Druck auf die Bedienfläche, könnte die Auswerteeinheit einem der Position entsprechenden Spannungswert bereits ermitteln, aber vor der Messung des Spannungswertes wird durch das Stromanschaltemittel und den damit eingeprägten Strom die erste Fläche von dem aktuellen elektrischen Potential auf ein zweites elektrisches Potential umgeladen. Mit dem Stromanschaltemittel "zieht" man demnach den Spannungswert bewusst zunächst von seinem eigentlichen Wert weg. Nach einer Wartezeit, die es der Fläche erlaubt, sich wieder auf das richtige elektrische Potential umzuladen, erfolgt die Messung des Spannungswertes. Das bedeutet, zunächst wird der Strom eingeprägt, und somit die Fläche auf einen falschen Wert vorgeladen. Danach wird aber eine Zeitdauer abgewartet, um der Fläche die Möglichkeit zu geben, sich wieder auf den richtigen Wert umzuladen.

Um die Störsicherheit zu erhöhen, ist die Auswerteeinheit derart ausgestaltet, für den Spannungswert einen ersten Spannungswert und einen zweiten Spannungswert zu messen und die Ergebnisse der beiden Spannungswerte auf eine Übereinstimmung zu prüfen.

Das Stromanschaltemittel ist dazu ausgestaltet, vor den Zeitpunkt der Messung des ersten Spannungswertes den Strom für eine erste Zeitdauer in die erste Fläche einzuprägen und nach Ablauf der ersten Zeitdauer den Strom wieder abzuschalten, dabei ist die Auswerteeinheit dazu ausgestaltet, nach Ablauf einer zweiten Zeitdauer die erste Messung des ersten Spannungswertes durchzuführen und weiterhin ist das Stromanschaltemittel dazu ausgestaltet nach der ersten Messung wiederum einen Strom in die erste Fläche für eine dritte Zeitdauer einzuprägen um die erste Fläche erneut von ihren derzeitigen Potential auf ein anderes Potential umzuladen, dabei ist die Auswerteeinheit weiterhin dazu ausgestaltet nach Ablauf einer vierten Zeitdauer die Messung des zweiten Spannungswertes durchzuführen.

Zwar werden bei anderen Verfahren nach dem Stand der Technik auch die Ergebnisse mindestens zweier Messungen auf Übereinstimmung geprüft, aber beim bisherigen Stand der Technik konnten aufeinanderfolgende Fehlmessungen sehr ähnliche Messungsergebnisse liefern, wodurch diese nur schwer bis unmöglich als falsch erkannt werden konnten.

Gemäß der Erfindung unterscheiden sich nun aufeinanderfolgende Fehlmessungen hingegen deutlich voneinander. Fehlmessungen sind somit eindeutig als solche zu identifizieren. Erreicht wird dieser Vorteil dadurch, dass die erste elektrisch leitfähige Fläche und die daraus resultierende Gesamtkapazität vor jeder Messung über vorzugsweise eine strombegrenzte Quelle, bewusst auf ein Potential vorgeladen wird, welches sich von dem richtigen Messwert unterscheidet. Das Vorladen der Fläche geschieht dabei nicht immer in Richtung eines gleichen Potentials, vielmehr gibt es mindestens zwei unterschiedliche Potentiale, in deren Richtung die strombegrenzte Quelle die Fläche bzw. die Gesamtkapazität umladen kann.

Eine effektive Ausprägung hinsichtlich der Störsicherheit für die Positionswertermittlung besteht darin, dass bei aufeinanderfolgenden Messungen der gleichen Koordinatenachse, die erste Fläche alternierend in Richtung des einen und des anderen Potentials vorgeladen wird. Hierdurch erreicht man, dass die eine Messung von einem niedrigeren Potential und die nachfolgende Messung von einem höheren Potential durchgeführt werden.

Eine Messung könnte somit folgenden Ablauf aufweisen: Die erste Fläche wird eine gewisse zeitlang über eine strombegrenzte Quelle in Richtung einer ersten Stellgrenze vorgeladen. Die strombegrenzte Quelle wird abgeschaltet, beispielsweise hochohmig geschaltet. Nun wird wieder eine gewisse Zeitdauer abgewartet, damit sich die erste Fläche über den Übergangswiderstand auf das Potential umladen kann, welches der Koordinate des Berührpunktes entspricht. Anschließend wird der zugehörige Spannungswert ermittelt. Die nachfolgende zweite Messung folgt dem gleichen Ablauf, wobei dieses Mal die strombegrenzte Quelle die erste Fläche in Richtung der anderen Stellgrenze vorlädt.

Vorteilhafter Weise weist das Stromanschaltemittel eine strombegrenzte Quelle und ein Schaltmittel auf.

Vorzugsweise ist das Stromanschaltemittel steuerbar und ausgestaltet bezogen auf einen Umladestrom den Strom anzupassen oder in seiner Richtung umzukehren, um die jeweilige Umladung der ersten Fläche von ihren derzeitigen Potential auf ein anderes Potential zu erreichen.

Mit Vorteil ist das Stromanschaltemittel derart ausgestaltet, dass es eine untere und eine obere Stellgrenze aufweist, welche mindestens den kleinsten bzw. den größten zu ermittelnden Spannungswert entspricht. Die Stellgrenzen der Quelle entsprechen damit vorzugsweise mindestens dem höchsten und dem niedrigsten theoretischen Messwert, was der größten und der kleinsten Koordinate gleichkommt.

Bei der Eingabevorrichtung ist es weiterhin von Vorteil, wenn die Auswerteeinheit weiterhin dazu ausgestaltet ist, den ersten Spannungswert und den zweiten Spannungswert miteinander zu vergleichen, und bei einer vorgebbaren Abweichung der zwei Spannungswerte zueinander die Messung als ungültig zu verwerfen.

Für den Fall, dass der Nachteil besteht, dass der Spannungswert der Wiperplatte bei zu niedrigem Druck auf die erste Fläche während der Umladewartezeit wegdriftet, beispielsweise durch Leckströme, kann man den Umladevorgang wie folgt abändern. Das Stromanschaltemittel ist dazu derart ausgestaltet, dass es während der zweiten Zeitdauer nicht gänzlich ausgeschaltet ist, sondern einen Strom zur Verfügung stellt, welcher einer Fehlmessung, hervorgerufen durch Leckströme in der Vorrichtung, entgegenwirkt, wobei insbesondere der Strom dem Absolutwert des Leckstroms mindestens gleich kommt, wodurch Fehlmessungen weiterhin sicher erkannt werden.

In einer besonderen Ausgestaltung ist die Eingabevorrichtung derart ausgestaltet, dass die erste elektrisch leitfähige Fläche einen ersten Anschluss und einen zweiten Anschluss aufweist, welche gegenüberliegend angeordnet sind, und die zweite elektrisch leitfähige Fläche einen dritten Anschluss und einen vierten Anschluss aufweist, welche gegenüberliegend angeordnet sind. Diese Anordnung entspricht einem 4-Draht Touch. Die Erfindung kann aber genauso gut auf einen 5-Draht bis 8-Draht Touch angewendet werden.

Auch wird die eingangs genannte Aufgabe durch ein Verfahren zur Positionsbestimmung einer Position eines Berührpunktes auf einer Bedienfläche einer Eingabevorrichtung gelöst. Das Verfahren wird auf eine Eingabevorrichtung mit einer ersten elektrisch leitfähigen Fläche und einer zweiten elektrisch leitfähigen Fläche, welche in einem Abstand voneinander angeordnet sind, angewendet. Dabei ist die erste elektrisch leitfähige Fläche als eine Bedienfläche ausgestaltet und derart beschaffen, dass ein Druck an einem Berührpunkt die erste Fläche im Berührpunkt derart verformt, dass sich die erste Fläche und die zweite Fläche im Berührpunkt kontaktieren und ein Stromweg über einen Teil der ersten Fläche bis zu dem Berührpunkt und von dem Berührpunkt über einen Teil der zweiten Fläche entsteht, wobei mit einer Auswerteeinheit ein Spannungswert längs des Stromweges gemessen wird und daraus ein Positionswert bestimmt wird.

Um bei diesem Verfahren eine Störfestigkeit für die Ermittlung von Messwerten zu erhöhen, wird zusätzlich ein Stromanschaltemittel verwendet, welches mit der ersten Fläche verbunden wird, um einen Strom in die erste Fläche einzuprägen um die erste Fläche von einem ersten elektrischen Potential auf ein zweites elektrisches Potential umzuladen, wobei die Auswerteeinheit und das Stromanschaltemittel derart miteinander synchronisiert werden, dass vor einem Zeitpunkt einer Spannungswertmessung der Auswerteeinheit das Stromanschaltemittel den Strom an die erste Fläche anschaltet.

Dabei wird in der Auswerteeinheit ein erster Spannungswert und ein zweiter Spannungswert gemessen und die Ergebnisse der beiden Spannungswerte werden auf einer Übereinstimmung hin überprüft, wobei mit dem Stromanschaltemittel vor dem Zeitpunkt der Messung des ersten Spannungswertes der Strom für eine erste Zeitdauer in die erste Fläche eingeprägt wird und nach Ablauf der ersten Zeitdauer der Strom wieder abgeschaltet wird, dabei wird die Auswerteeinheit derart betrieben, dass nach Ablauf einer zweiten Zeitdauer die erste Messung des ersten Spannungswertes durchgeführt wird und nach der ersten Messung wird wiederum über das Stromanschaltemittel ein Strom in die erste Fläche für eine dritte Zeitdauer eingeprägt um die erste Fläche erneut von ihrem derzeitigen Potential auf ein anderes Potential umzuladen, nach Ablauf einer vierten Zeitdauer wird die Messung des zweiten Spannungswertes durchgeführt.

Als entscheidender Vorteil für das Verfahren wird angesehen, dass die erste Fläche vor einer Messung bewusst auf einen "falschen" Wert vorgeladen wird. Hierzu stehen zwei unterschiedliche Potentiale zur Verfügung, so dass die erste Fläche sowohl oberhalb als auch unterhalb des richtigen bzw. möglichen zu ermittelnden Spannungswert vorgeladen wird. Dies hat zur Folge, dass in einem Fall der mögliche Messfehler positiv und in einem anderen Fall negativ wird. Zieht man nun zwei kurz hintereinander ermittelte Messwerte voneinander ab, bleibt als Ergebnis die Summe der Messfehler übrig. Somit kann sofort entschieden werden, ob die Genauigkeit der Messung (Positionswert) ausreicht oder ob die Messung wiederholt werden muss. Gegenüber den bekannten Ausprägungen des Standes der Technik kann bei der erfindungsgemäßen Ausprägung auf eine Druckmessung (Z-Messung) verzichtet werden, wodurch eine Empfindlichkeit der Bedienfläche bzw. des Touch-Sensors erhöht wird.

Die Zeichnung zeigt ein Ausführungsbeispiel um die Erfindung näher zu erläutern. Es zeigt
- FIG 1: eine schematisch dargestellte Eingabevorrichtung mit einer Auswerteeinheit und einem Touch-Sensor bestehen aus einer ersten und einer zweiten elektrisch leitfähigen Fläche,
- FIG 2: ein Diagramm von Ladekurven bei unterschiedlichen Anpressdrücken,
- FIG 3: ein Diagramm von Ladekurven bei ähnlichen Anpressdruck, und
- FIG 4: ein zeitlicher Messablauf für den Start einer ersten Messung, die entsprechenden Wartezeiten und den anschließenden Start einer zweiten Messung.

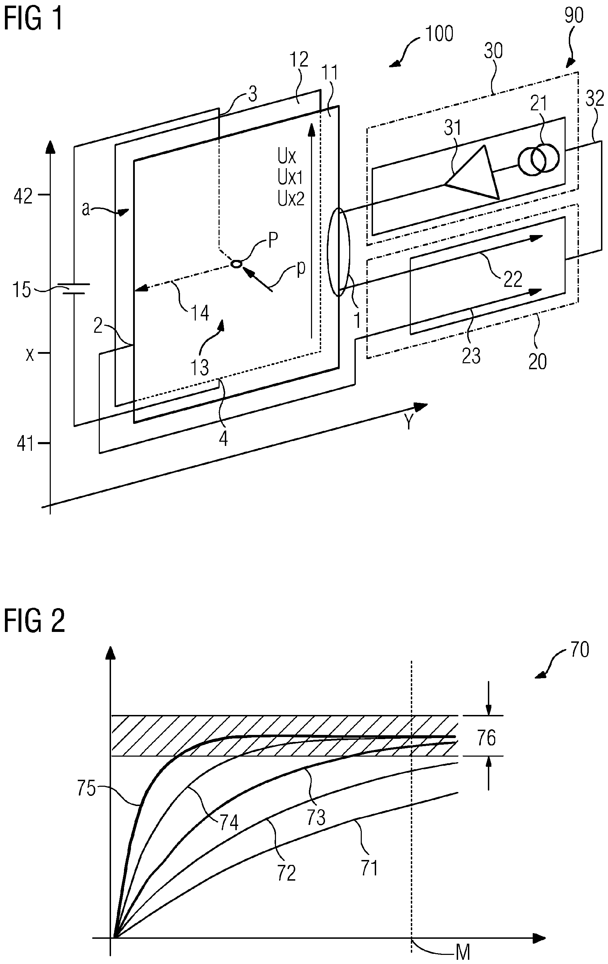

Gemäß FIG 1 ist eine Eingabevorrichtung 100 schematisch dargestellt. Die Eingabevorrichtung 100 umfasst eine Bedienfläche 13, welche mit einem Bedienobjekt, z.B. einem Finger einer menschlichen Hand, berührt werden kann, wobei eine an die Bedienfläche 13 angeschlossene Auswerteeinheit 20 aus einer Spannungswerte-Messung einen Positionswert X eines Berührpunktes P ermitteln kann.

Derartige Eingabevorrichtungen werden beispielsweise als Touch-Sensoren vor einem LCD-Display eines Bedienpanels eingesetzt. Mit dem Bedienpanel, welches demnach einen Touch-Screen aufweist, können beispielsweise unter Zuhilfenahme von Automatisierungsgeräten industrielle Prozesse gesteuert werden. Die Bedienfläche 13 weist eine erste elektrisch leitfähige Fläche 11, mit einem ersten Anschluss 1 und einem zweiten Anschluss 2 auf, welche gegenüberliegend angeordnet sind. Hinter der ersten elektrisch leitfähigen Fläche 11 ist eine zweite elektrisch leitfähige Fläche 12, mit einem dritten Anschluss 3 und einem vierten Anschluss 4, welche gegenüberliegend angeordnet sind, angeordnet. Durch diese übereinanderliegende Anordnung von den zwei elektrisch leitfähigen Flächen 11,12 ist ein resistiver Touch-Sensor realisiert. Die elektrisch leitfähigen Flächen 11,12 sind dabei in einem Abstand a zueinander angeordnet. Der Abstand a sorgt für eine elektrische Isolierung der ersten Fläche 11 zu der zweiten Fläche 12 wenn kein mechanischer Druck auf die erste Fläche 11 ausgeübt wird.

In der Regel wird die hintere Fläche, also die zweite elektrisch leitfähige Fläche 12 mit einer Glas- oder Kunststoffplatte realisiert, während die obere Fläche, also die erste elektrisch leitfähige Fläche 11, aus einer Polyesterfolie besteht. Zwischen den beiden Platten bzw. zwischen den beiden Flächen befinden sich gleichmäßig angeordnet Abstandshalter, sogenannte Spacer, welche verhindern, dass sich die beiden Flächen bzw. Platten in einem unbetätigten Zustand berühren.

Die erste elektrisch leitfähige Fläche 11 ist demnach derart beschaffen, dass ein Druck p in dem Berührpunkt P die erste Fläche 11 im Berührpunkt P derart verformt, dass sich die erste Fläche 11 und die zweite Fläche 12 im Berührpunkt P kontaktieren und ein Stromweg 14 von dem dritten Anschluss 3 über einen Teil der zweiten Fläche 12 bis zu dem Berührpunkt P und von dem Berührpunkt P über einen Teil der ersten Fläche 11 bis zu einem zweiten Anschluss 2 entsteht.

Die zweite Fläche 12 wird über eine Spannungsquelle 15, welche zum Einen an den dritten Anschluss 3 und zum anderen an einem vierten Anschluss 4 der zweiten Fläche 12 angeschlossen ist, mit einer Spannung versorgt. Mit Hilfe der Spannung der Spannungsquelle 15 entsteht zwischen dem dritten Anschluss 3 und dem vierten Anschluss 4 ein Spannungspotential, welches sich entsprechend dem ohmschen Gesetz zwischen dem dritten Anschluss 3 und dem vierten Anschluss 4 gleichmäßig verteilt. Die Höhe der elektrischen Spannung an einen bestimmten Punkt P auf der Platte ist somit ein Maß für die eindimensionale Position des Punktes P auf einer Achse der Platte. Wird ein mechanischer Druck p auf die äußere Fläche (Folie) ausgeübt, entsteht an dieser Stelle eine elektrische Verbindung zwischen den zwei Flächen 11,12.

Bei einem Touch-Sensor werden üblicherweise die Positionswerte x einer X-Achse X und Y einer Y-Achse y abgefragt. Das entsprechende Koordinatensystem ist unterhalb der Eingabevorrichtung 100 angedeutet.

Mit dem Beispiel der Eingabevorrichtung 100 der FIG 1 wird die Erfassung einer Koordinate x der X-Achse X erläutert. Eine Erfassung der weiteren y-Koordinate der Y-Achse Y wird ähnlich durchgeführt.

Die Auswerteeinheit 20 ist ausgestaltet, den Spannungswert Uₓ längs des Stromweges 14 zu messen und daraus den Positionswert x zu bestimmen. Dabei ist die Auswerteeinheit 20 dazu ausgestaltet für den Spannungswert Uₓ einen ersten Spannungswert Uₓ₁ und einen zweiten Spannungswert Uₓ₂ zu messen und die Ergebnisse der beiden Spannungswerte Uₓ₁, Uₓ₂ auf eine Übereinstimmung zu vergleichen.

An die Auswerteeinheit 20 führen eine erste Messleitung 22 und eine zweite Messleitung 23. Die erste Messleitung 22 steht mit dem ersten Anschluss 1 in Verbindung und die zweite Messleitung 23 steht mit dem zweiten Anschluss 2 in Verbindung.

Um eine Zuverlässigkeit der Ermittlung der Messwerte zu verbessern, wurde bei den Eingabevorrichtungen nach dem Stand der Technik vor und/oder nach einer Koordinatenmessung ein Übergangswiderstand gemessen (Z-Messung). Lag dieser gemessene Übergangswiderstand über einer festgelegten Schwelle, wurde die Messung gar nicht erst gestartet bzw. verworfen.

Bei der erfindungsgemäßen Vorrichtung bzw. dem Verfahren ist es nunmehr nicht mehr notwendig eine Z-Messung durchzuführen, dennoch wird die Zuverlässigkeit der Messwerteermittlung erhöht.

Hierzu weist eine Kontrolleinheit 90 neben der Auswerteeinheit 20 ein Stromanschaltemittel 30 auf. Die Auswerteeinheit 20 und das Stromanschaltemittel 30 sind derart ausgestaltet, dass sie in Bezug auf einen Zeitpunkt einer Spannungswertmessung der Auswerteeinheit 20 miteinander synchronisiert sind. Eine Synchronisationsleitung 32 verbindet für die Synchronisierung die Auswerteeinheit 20 mit dem Stromanschaltemittel 30. Dabei ist das Stromanschaltemittel 30 dazu ausgestaltet, vor dem Zeitpunkt einer Spannungswertmessung einen Strom in die erste Fläche 11 einzuprägen um die erste Fläche 11 von einem ersten elektrischen Potential P0 auf ein zweites elektrisches Potential P1 umzuladen.

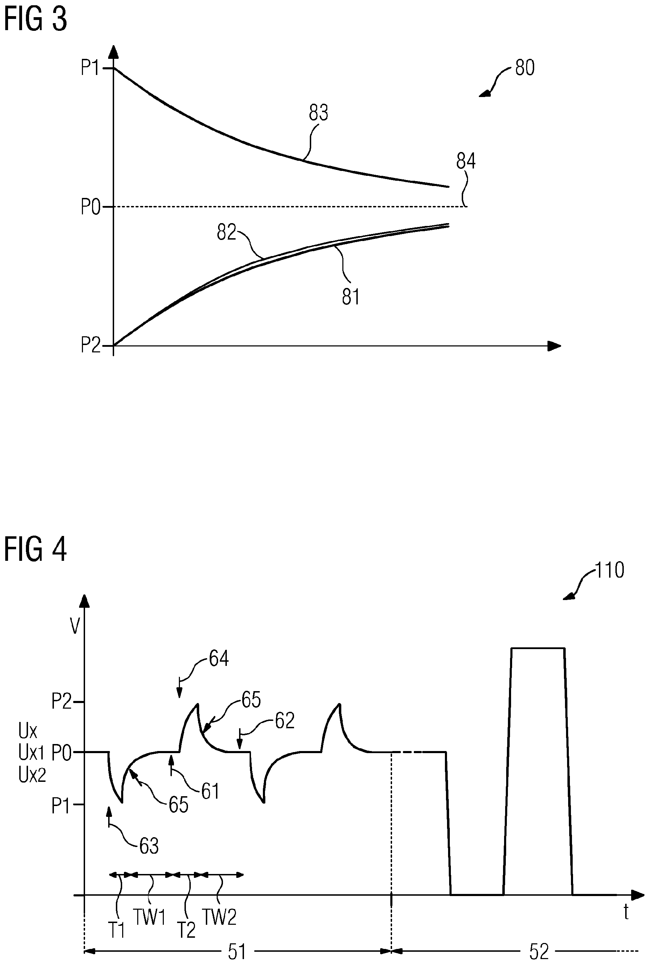

Das Stromanschaltemittel 30 weist eine Stromquelle 21 und ein Schaltmittel 31 auf, welche in einer Reihenschaltung an den ersten Anschluss 1 angeschlossen sind. Vor der Messung des ersten Spannungswertes Uₓ₁ wird mit dem Schaltemittel 31 an den ersten Anschluss 1 ein Strom für eine erste Zeitdauer T1 eingeprägt (siehe FIG 4). Weiterhin ist das Stromanschaltemittel 30 dazu ausgestaltet, nach Ablauf der ersten Zeitdauer T1 den Strom wieder abzuschalten, dabei ist die Auswerteeinheit 20 dazu ausgestaltet, nach Ablauf einer zweiten Zeitdauer TW1 die erste Messung des ersten Spannungswertes Uₓ₁ durchzuführen und weiterhin ist das Stromanschaltemittel 30 dazu ausgestaltet, nach der ersten Messung wiederum einen Strom in die erste Fläche 11 für eine dritte Zeitdauer T2 einzuprägen um die erste Fläche 11 erneut von ihrem derzeitigen Potential P0 auf ein anderes Potential P2 umzuladen, dabei ist die Auswerteeinheit 20 weiterhin dazu ausgestaltet, nach Ablauf einer vierten Zeitdauer TW2 die Messung des zweiten Spannungswertes Uₓ₂ durchzuführen.

Der erfasste erste Spannungswert Uₓ₁ und der erfasste zweite Spannungswert Uₓ₂ sind nun in der Auswerteeinheit 20 hinterlegt, wobei die Auswerteeinheit 20 ausgestaltet ist für den Spannungswert Uₓ den ersten Spannungswert Uₓ₁ und den zweiten Spannungswert Uₓ₂ auf eine Übereinstimmung zu prüfen.

Bei der Ermittlung der Koordinate x des Berührpunktes P kann sich der ohmsche Übergangswiderstand zwischen der ersten Fläche 11 und der zweiten Fläche 12 und eine Kapazität der beiden Flächen 11,12 zueinander störend auswirken. Hinzu kommt noch ein Kapazitätsanteil der Verschaltung der Eingabevorrichtung, z.B. durch eine Befilterung. Diese Kapazitäten sollen zu einer Gesamtkapazität zusammengefasst werden. Die Gesamtkapazität verzögert eine Messung, da sie umgeladen werden muss. Der Übergangswiderstand ist druckabhängig.

Mit der FIG 2 ist ein Diagramm 70 von Lade-Kurven bei unterschiedlichen Anpressdrücken dargestellt. Zur Erläuterung sind fünf übereinander gelegte Umladekurven, durch einen ersten Spannungsverlauf 71, einem zweiten Spannungsverlauf 72, einen dritten Spannungsverlauf 73, einen vierten Spannungsverlauf 74 und einem fünften Spannungsverlauf 75 dargestellt. Die Spannungsverläufe 71,72,73,74,75 könnten sich bei unterschiedlichem Anpressdruck p eines Berührpunktes P ergeben.

Die Messung des Spannungswertes Uₓ soll jeweils zu einem Messzeitpunkt M (gestrichelte Linie) ausgeführt werden. Betrachtet man einen Bereich 76 für eine akzeptable Messung so führen der erste Spannungsverlauf 71 und der zweite Spannungsverlauf 72 zu einer ungenauen Messung, also zu einer Fehlmessung. Das bedeutet, für den ersten Spannungsverlauf 71 und den zweiten Spannungsverlauf 72 war der Anpressdruck p für eine genaue Messung nicht ausreichend groß. Der dritte Spannungsverlauf 73 und der vierte Spannungsverlauf 74 führen zwar in den Bereich 76 für eine akzeptable Messung hinein, erreichen den Bereich 76 jedoch später als es bei dem gewünschten fünften Spannungsverlauf 75 der Fall ist.

Der Übergangswiderstand zwischen der ersten Fläche 11 und der zweiten Fläche 12 folgt nicht nur einer Funktion des Anpressdruckes p, sondern wird auch dadurch beeinflusst, dass durch ein Ziehen des Bedienobjektes über die Bedienfläche 13, also über den Touch-Sensor, es kontinuierlich zu Kontaktunterbrechungen kommen kann, selbst wenn der Druck konstant gehalten wird.

Ein Grund hierfür sind die Abstandshalter. Wird der Druck p genau an einer Stelle der ersten Fläche 11 ausgeübt, unter die sich ein Abstandshalter befindet, wird dieser Abstandshalter einen großen Teil des Druckes p aufnehmen. Die erste Fläche 11 berührt die zweite Fläche 12 an dieser Stelle dann weniger stark, wodurch sich der Übergangswiderstand zwischen der ersten Fläche 11 und der zweiten Fläche 12 stark erhöht.

Es kann auch sein, dass die elektrische Verbindung über den Übergangswiderstand in dem Berührpunkt P ganz abreißt.

Für die mit FIG 2 dargestellten Spannungsverläufe bedeutet dies, dass in den Spannungsverläufen ein Spannungseinbruch entstehen kann an denen für eine gewisse Zeit kein weiterer Spannungsanstieg zu erkennen ist.

Die durch die Abstandshalter hervorgerufenen hochohmigen Übergänge bzw. Unterbrechungen verlängern eine Umladezeit der Gesamtkapazität erheblich. Zu einem vorgegebenen Messzeitpunkt M ist die Spannung an der Gesamtkapazität dann folglich noch nicht eingeschwungen, man erhält trotz eines vermeintlichen hohen Anpressdruckes eine Fehlmessung.

Um nun aber die Zuverlässigkeit der Messwerte zu verbessern, wird die erste elektrisch leitfähige Fläche 11 (und die daraus resultierenden Kapazitäten) vor jeder Messung, über die strombegrenzte Quelle 21, bewusst auf ein Potential vorgeladen, welches sich vom richtigen zukünftigen Messwert unterscheidet.

Das Vorladen der ersten Fläche 11 geschieht dabei nicht immer in Richtung eines gleichen Potentials, vielmehr gibt es mindestens zwei unterschiedliche Potentiale nämlich ausgehend von einem ersten Potential P0, ein zweites Potential P1 und ein drittes Potential P2, in deren Richtung die strombegrenzte Quelle 21 die erste Fläche 11 umlädt.

Die strombegrenzte Quelle 21 ist dabei steuerbar ausgestaltet und bezogen auf das zu erreichende zweite Potential P1 bzw. das zu erreichende dritte Potential P2 kann sie gegensätzliche Ströme in die erste Fläche 11 einzuprägen.

Die Stellgrenzen der strombegrenzten Quelle 21 sollten idealerweise oberhalb als auch unterhalb des "richtigen" Messwertes wählbar sein. Am einfachsten ist diese Forderung zu erfüllen, in dem die Stellgrenzen der strombegrenzten Quelle 21 mindestens dem höchsten und dem niedrigsten theoretisch möglichen Messwert entsprechen, was einen kleinsten Positionswert 41 (siehe FIG 1) und einem größten Positionswert 42 (siehe FIG 1) entspricht.

Die Auswahl, auf welches Potential die erste Fläche 11 vor einer Messung vorgeladen werden soll, kann unterschiedlichen Strategien folgen.

Eine effektive Auswahl besteht darin, bei aufeinanderfolgenden Messungen der gleichen Koordinatenachse, die erste Fläche 11 alternierend in Richtung des einen und des anderen Potentials vorzuladen. Hierdurch erreicht man, dass die erste Messung beispielsweise von einem niedrigen Potential und die nachfolgende zweite Messung beispielsweise von einem höheren Potential beginnend durchgeführt werden.

Die FIG 3 wird herangezogen um das Prinzip der ersten Messung von einem niedrigen Potential und der nächsten Messung von einem höheren Potential, nämlich dem zweiten Potential P1 bzw. dem dritten Potential P2, näher zu erläutern. In der FIG 3 ist ein Diagramm 80 mit Ladekurven bei einem ähnlichen Anpressdruck p dargestellt. Die erste Umladekurve 81, die zweite Umladekurve 82 und die dritte Umladekurve 83 sind zur Veranschaulichung um einen Zielwert 84 dargestellt. Bei allen drei Umladekurven 81,82,83 sei der Anpressdruck in allen drei Fällen so gering, dass die erste Fläche 11 im Berührpunkt P bezogen auf ihren zu messenden Spannungswert Uₓ für die Positionsbestimmung des Positionswertes x nicht den Zielwert 84 erreicht.

Die erste Umladekurve 81 und die zweite Umladekurve 82 starten beide von einem gleichen Potential, weshalb sie sich wegen des ähnlichen Anpressdruckes kaum voneinander unterscheiden. Auch der Endpunkt ist bei beiden fast identisch. Bei einem Vergleich der beiden Kurvenverläufe ist weder ersichtlich, dass beide falsch sind, noch wie groß der Fehler sein mag. Die große Ähnlichkeit der beiden Kurvenverläufe hingegen suggeriert jedoch eine akkurate Messung. Tatsächlich aber ist der ermittelte Wert zu gering.

Die dritte Umladekurve 83 hingegen startet von einem höheren Potential oberhalb des unbekannten richtigen Zielwertes 84. Da auch bei dieser Messung also bei der dritten Umladekurve 83 der Anpressdruck nicht ausreichend war, wird auch hier der Zielwert nicht erreicht. Der Abstand zum Zielwert ist betragsmäßig genauso groß wie bei der ersten Umladekurve 81 und der zweiten Umladekurve 82. Da der Vorgang jedoch von "oben" gestartet wurde, liegt der ermittelte Messwert nicht unterhalb, sondern oberhalb des Zielwertes 84.

Der mit der dritten Umladekurve 83 ermittelte Messwert unterscheidet sich also von denen, der mit der ersten Umladekurve 81 oder mit der zweiten Umladekurve 82 ermittelten Messwerte sehr stark. Es ist somit zweifelsfrei festzustellen, dass zumindest eine Messung ein falsches Ergebnis geliefert haben muss.

Man kann aus den zwei unterschiedlichen Messwerten die folgende Erkenntnis ziehen:
a) Der richtige Wert muss zwischen dem Endwert der oberen und der unteren Kurve liegen.
b) Der Messfehler der einzelnen Messung kann maximal die Differenz der zwei Messwerte sein.
c) Werden die zwei Endwerte miteinander gemittelt, kann der Messfehler maximal die halbe Differenz der zwei Messwerte betragen.

Gemäß der FIG 4 ist ein möglicher Messablauf 110 dargestellt. Über die Zeit t ist ein möglicher Spannungsverlauf der Spannungswerte U_{X1} und U_{X2} dargestellt. Ein erster Bereich 51 stellt einen zeitlichen Bereich dar, in dem im Berührpunkt P ein Druck p ausgeübt wird. Der anschließende zweite Bereich 52 stellt einen zeitlichen Bereich dar in dem die Bedienfläche 13 nicht betätigt ist.

Mit einem Start 63 der Einprägung des Stromes durch das Stromanschaltemittel 30 bricht der Spannungsverlauf ein, wobei der Strom für eine erste Zeitdauer T1 an die erste Fläche 11 über das Schaltmittel 31 angeschaltet bleibt. Nach Ablauf der ersten Zeitdauer T1 wird der Strom über das Schaltmittel 31 abgeschaltet und es wird eine zweite Zeitdauer TW1 gestartet. Während dieser zweiten Zeitdauer TW1 kann sich die Gesamtkapazität der Anordnung wieder in Richtung des Zielwertes umladen. Es findet demnach ein Umladevorgang 65 statt. Mit Ablauf der zweiten Zeitdauer TW1 ist für eine spätere Messung die Gesamtkapazität genügend umgeladen und es kann zu einem ersten Messzeitpunkt 61 der erste Spannungswert U_{X1} ermittelt werden. Im Anschluss daran beginnt der Start 64 der Anschaltung des Stromes mit umgekehrten Vorzeichen, welches in einen Umladevorgang 65 in Richtung des Zielwertes übergeht, wobei der Strom für eine dritte Zeitdauer T2 angeschaltet wurde. Mit Ablauf der dritten Zeitdauer T2 wird eine vierte Zeitdauer TW2 gestartet. Ist auch die vierte Zeitdauer TW2 abgelaufen, so wird zu einem zweiten Messzeitpunkt 62 der zweite Spannungswert U_{X2} ermittelt.

Alternativ zu der bisher beschriebenen Vorgehensweise, bei welcher immer abwechselnd zwischen den Potentialen P1,P2 oberhalb und unterhalb des möglichen bzw. richtigen Messwertes umgeschaltet wurde, kann auch eine andere Strategie des Vorladens der ersten Fläche 11 erfolgen. Dazu wird im Unterschied zur ersten Strategie jedoch nicht streng alternierend zwischen den Potentialen P1,P2 oberhalb und unterhalb des möglichen Messwertes umgeschaltet, vielmehr wird die erste Fläche vor jeder Messung in Richtung desjenigen Potentials vorgeladen, welches weiter weg vom letzten erfassten Messwertes liegt.

Dadurch, dass die Gesamtkapazität durch das Vorladen stets in Richtung eines weit entfernten Potentials umgeladen wird, muss beim nachfolgenden Umladevorgang über den Übergangswiderstand wieder ein entsprechend großes Potential überbrückt werden. Dies macht es unwahrscheinlicher, dass benachbarte Fehlmessungen auf einen jeweils ähnlichen Messwert kommen und als richtig interpretiert werden.

## Patentansprüche

1. Eingabevorrichtung (100) mit
einer ersten elektrisch leitfähigen Fläche (11) und einer zweiten elektrisch leitfähigen Fläche (12), welche in einem Abstand (a) voneinander angeordnet sind, dabei ist die erste elektrisch leitfähige Fläche (11) als eine Bedienfläche (13) ausgestaltet und derart beschaffen, dass ein Druck (p) an einem Berührpunkt (P) die erste Fläche (11) im Berührpunkt (P) derart verformt, dass sich die erste Fläche (11) und die zweite Fläche (12) im Berührpunkt (P) kontaktieren und ein Stromweg (14) über einen Teil der ersten Fläche (11) bis zu dem Berührpunkt (P) und von dem Berührpunkt (P) über einen Teil der zweiten Fläche (12) entsteht, weiterhin mit
• einer Auswerteeinheit (20), welche ausgestaltet ist einen Spannungswert (Uₓ) längs des Stromweges (14) zu messen und daraus einen Positionswert (x) zu bestimmen,
• einem Stromanschaltemittel (30), welches mit der ersten Fläche (11) in Verbindung steht,
wobei die Auswerteeinheit (20) und das Stromanschaltemittel (30) derart ausgestaltet sind, dass sie im Bezug auf einen Zeitpunkt einer Spannungswertmessung der Auswerteeinheit (20) miteinander synchronisiert sind, wobei das Stromanschaltemittel (30) ausgestaltet ist
vor dem Zeitpunkt einer Spannungswertmessung einen Strom in die erste Fläche (11) einzuprägen um die erste Fläche (11) von einem ersten elektrischen Potential (P0) auf ein zweites elektrische Potential (P1) umzuladen, wobei die Auswerteeinheit (20) ausgestaltet ist für den Spannungswert (Uₓ) einen ersten Spannungswert (Uₓ₁) und einen zweiten Spannungswert (Uₓ₂) zu messen und die Ergebnisse der beiden Spannungswerte (Uₓ₁,Uₓ₂) auf eine Übereinstimmung zu prüfen,
wobei das Stromanschaltemittel (30) weiterhin dazu ausgestaltet ist
- vor dem Zeitpunkt der Messung des ersten Spannungswertes (Uₓ₁) den Strom für eine erste Zeitdauer (T1) in die erste Fläche (11) einzuprägen und nach Ablauf der ersten Zeitdauer (T1) den Strom wieder abzuschalten,
- dabei ist die Auswerteeinheit (20) dazu ausgestaltet nach Ablauf einer zweiten Zeitdauer (TW1)
- die erste Messung des ersten Spannungswertes (Uₓ₁) durchzuführen und weiterhin ist das Stromanschaltemittel (30) dazu ausgestaltet nach der ersten Messung wiederum einen Strom in die erste Fläche (11) für eine dritte Zeitdauer (T2) einzuprägen um die erste Fläche (11) erneut von ihrem derzeitigen Potential (P0) auf ein drittes Potential (P2) umzuladen, dabei ist die Auswerteeinheit (20) weiterhin dazu ausgestaltet nach Ablauf einer vierten Zeitdauer (TW2) die Messung des zweiten Spannungswertes (Uₓ₂) durchzuführen,
**dadurch gekennzeichnet, dass** das Stromanschaltemittel (30) ausgestaltet ist die erste Fläche (11) vor jeder Messung in Richtung desjenigen Potentials umzuladen, welches weiter weg vom letzten erfassten Messwert liegt.

2. Eingabevorrichtung (100) nach Anspruch 1, wobei das Stromanschaltemittel (30) eine strombegrenzte Quelle (21) und ein Schaltmittel (31) aufweist.

3. Eingabevorrichtung (100) nach einem der Ansprüche 1 oder 2, wobei das Stromanschaltemittel (30) steuerbar ist und ausgestaltet ist bezogen auf einen Umladestrom den Strom anzupassen oder in seiner Richtung umzukehren um die jeweilige Umladung der ersten Fläche (11) von ihrem derzeitigen Potential (P0) auf ein anderes Potential (P1,P2) zu erreichen.

4. Eingabevorrichtung (100) nach einem der Ansprüche 1 bis 3, wobei das Stromanschaltemittel (30) derart ausgestaltet ist, dass es eine untere und eine obere Stellgrenze aufweist, welche mindestens dem kleinsten bzw. dem größten zu ermittelnden Spannungswert entspricht.

5. Eingabevorrichtung (100) nach einem der Ansprüche 1 bis 4, wobei die Auswerteeinheit (20) weiterhin dazu ausgestaltet ist, den ersten Spannungswert (Uₓ₁) und den zweiten Spannungswert (Uₓ₂) miteinander zu vergleichen und bei einer vorgebbaren Abweichung der zwei Spannungswerte zueinander die Messung als ungültig zu verwerfen.

6. Eingabevorrichtung (100) nach einem der Ansprüche 1 bis 5, wobei das Stromanschaltemittel (30) derart ausgestaltet ist, dass es während der zweiten Zeitdauer (TW1) nicht gänzlich ausgeschaltet ist sondern einen Strom zur Verfügung stellt, welcher einer Fehlmessung, hervorgerufen durch Leckströme in der Vorrichtung, entgegenwirkt.

7. Eingabevorrichtung (100) nach einem der Ansprüche 1 bis 6, wobei
• die erste elektrisch leitfähige Fläche (11) einen ersten Anschluss (1) und
einen zweiten Anschluss (2) aufweist, welche gegenüberliegend angeordnet sind,
• die zweite elektrisch leitfähige Fläche (12),
einen dritten Anschluss (3) und
einen vierten Anschluss (4) aufweist, welche gegenüberliegend angeordnet sind.

8. Verfahren zur Positionsbestimmung einer Position eines Berührpunktes (P) auf einer Bedienfläche (13) einer Eingabevorrichtung (100), wobei die Eingabevorrichtung (100) eine erste elektrisch leitfähige Fläche (11) aufweist, welche in einem Abstand (a) voneinander angeordnet sind, dabei ist die erste elektrisch leitfähige Fläche (11) als eine Bedienfläche (13) ausgestaltet und derart beschaffen, dass ein Druck (p) an einem Berührpunkt (P) die erste Fläche (11) im Berührpunkt (P) derart verformt, dass sich die erste Fläche (11) und die zweite Fläche (12) im Berührpunkt (P) kontaktieren und ein Stromweg (14) über einen Teil der ersten Fläche (11) bis zu dem Berührpunkt (P) und von dem Berührpunkt (P) über einen Teil der zweiten Fläche (12) entsteht, wobei mit einer Auswerteeinheit (20) ein Spannungswert (Uₓ) längs des Stromweges (14) gemessen wird und daraus ein Positionswert (x)bestimmt wird,
wobei zusätzlich ein Stromanschaltemittel (30) verwendet wird, welches mit der ersten Fläche (11) verbunden wird, um einen Strom in die erste Fläche (11) einzuprägen um die erste Fläche (11) von einem ersten elektrischen Potential (P0) auf ein zweites elektrische Potential (P1) umzuladen, wobei die Auswerteeinheit (20) und das Stromanschaltemittel (30) derart miteinander synchronisiert werden, dass vor einem Zeitpunkt einer Spannungswertmessung der Auswerteeinheit (20) das Stromanschaltemittel (30) den Strom an die erste Fläche anschaltet, wobei mit der Auswerteeinheit (20) ein erster Spannungswert (Uₓ₁) und ein zweiter Spannungswert (Uₓ₂) gemessen wird und die Ergebnisse der beiden Spannungswerte (Uₓ₁,Uₓ₂) auf eine Übereinstimmung überprüft werden, wobei
mit dem Stromanschaltemittel (30) vor dem Zeitpunkt der Messung des ersten Spannungswertes (Uₓ₁) der Strom für eine erste Zeitdauer (T1) in die erste Fläche (11) eingeprägt wird und nach Ablauf der ersten Zeitdauer (T1) der Strom wieder abgeschaltet wird, dabei wird die Auswerteeinheit (20) derart betrieben, dass nach Ablauf einer zweiten Zeitdauer (TW1) die erste Messung des ersten Spannungswertes (Uₓ₁) durchgeführt wird und nach der ersten Messung wird wiederum über das Stromanschaltemittel ein Strom in die erste Fläche (11) für eine dritte Zeitdauer (T2) eingeprägt wird um die erste Fläche (11) erneut von ihrem derzeitigen Potential (P0) auf ein drittes Potential (P2) umzuladen, nach Ablauf einer vierten Zeitdauer (TW2) wird die Messung des zweiten Spannungswertes (Uₓ₂) durchgeführt,
**dadurch gekennzeichnet , dass** die erste Fläche (11) vor jeder Messung in Richtung desjenigen Potentials vorgeladen wird, welches weiter weg vom letzten erfassten Messwert liegt.

## Claims

1. Input device (100) comprising
a first electrically conductive surface (11) and a second electrically conductive surface (12), these being arranged at a distance (a) from each other, wherein the first electrically conductive surface (11) is designed as an operating surface (13) and is so embodied that a pressure (p) on a touch point (P) deforms the first surface (11) at the touch point (P) such that the first surface (11) and the second surface (12) come into contact at the touch point (P) and a current path (14) is created over part of the first surface (11) to the touch point (P) and from the touch point (P) over part of the second surface (12), further comprising
• an analysis unit (20) which is so designed as to measure a voltage value (Uₓ) along the current path (14) and to ascertain a position value (x) therefrom, and
• a current-activation means (30) which is connected to the first surface (11),
wherein the analysis unit (20) and the current-activation means (30) are so designed as to be synchronised with each other in relation to a time point of a voltage value measurement of the analysis unit (20), wherein the current-activation means (30) is so designed as to impress a current into the first surface (11) before the time point of a voltage value measurement, in order to exchange charge the first surface (11) from a first electric potential (P0) to a second electric potential (P1), wherein the analysis unit (20) is so designed as to measure a first voltage value (Uₓ₁) and a second voltage value (Uₓ₂) for the voltage value (Uₓ), and to check the results of the two voltage values (Uₓ₁,Uₓ₂) in respect of their agreement,
wherein the current-activation means (30) is further so designed as
- to impress the current into the first surface (11) for a first time period (T1) before the time point of the measurement of the first voltage value (Uₓ₁) and to deactivate the current again after said first time period (T1) has elapsed,
- the analysis unit (20) being so designed as to carry out the first measurement of the first voltage value (Uₓ₁) after a second time period (TW1) has elapsed, and the current-activation means (30) being further so designed as to impress a current into the first surface (11) again for a third time period (T2) after the first measurement, in order to exchange charge the first surface (11) again from its present potential (P0) to another potential (P2), the analysis unit (20) being further so designed as to carry out the measurement of the second voltage value (Uₓ₂) after a fourth time period (TW2) has elapsed,
**characterised in that** the current-activation means (30) is so designed as to exchange charge the first surface (11) before each measurement in the direction of that potential which lies further away from the most recently captured measured value.

2. Input device (100) according to claim 1, wherein the current-activation means (30) has a current-restricted source (21) and a switching means (31).

3. Input device (100) according to one of claims 1 or 2, wherein the current-activation means (30) can be regulated and is so designed as to reverse the direction of or adapt the current in relation to an exchange charge current, in order to achieve the respective exchange charging of the first surface (11) from its present potential (P0) to another potential (P1,P2).

4. Input device (100) according to one of claims 1 to 3, wherein the current-activation means (30) is so designed as to have a lower and an upper limit of adjustment, said limits corresponding respectively to at least the lowest and the highest voltage values that are to be determined.

5. Input device (100) according to one of claims 1 to 4, wherein the analysis unit (20) is further so designed as to compare the first voltage value (Uₓ₁) with the second voltage value (Uₓ₂), and to discard the measurement as invalid if the two voltage values differ by a predefinable extent from each other.

6. Input device (100) according to one of claims 1 to 5, wherein the current-activation means (30) is designed in such a way that it is not switched off completely during the second time period (TW1), but provides a current which counteracts an incorrect measurement brought about by leakage currents in the device.

7. Input device (100) according to one of claims 1 to 6, wherein
• the first electrically conductive surface (11) has a first connection interface (1) and
a second connection interface (2), these being arranged opposite to each other,
• the second electrically conductive surface (12) has a third connection interface (3) and
a fourth connection interface (4), these being arranged opposite to each other.

8. Method for ascertaining a position of a touch point (P) on an operating surface (13) of an input device (100), wherein the input device (100)
has a first electrically conductive surface (11), these being arranged at a distance (a) from each other, the first electrically conductive surface (11) being designed as an operating surface (13) and being so embodied that a pressure (p) on a touch point (P) deforms the first surface (11) at the touch point (P) such that the first surface (11) and the second surface (12) come into contact at the touch point (P) and a current path (14) is created over part of the first surface (11) to the touch point (P) and from the touch point (P) over part of the second surface (12), wherein an analysis unit (20) is used to measure a voltage value (Uₓ) along the current path (14) and to ascertain a position value (x) therefrom,
wherein use is also made of a current-activation means (30), which is connected to the first surface (11), in order to impress a current into the first surface (11) in order to exchange charge the first surface (11) from a first electric potential (P0) to a second electric potential (P1), wherein the analysis unit (20) and the current-activation means (30) are synchronised with each other in such a way that the current-activation means (30) activates the current to the first surface before a time point of a voltage value measurement of the analysis unit (20), wherein the analysis unit (20) measures a first voltage value (Uₓ₁) and a second voltage value (Uₓ₂), and checks the results of the two voltage values (Uₓ₁,Uₓ₂) in respect of their agreement, wherein
the current-activation means (30) impresses the current into the first surface (11) for a first time period (T1) before the time point of the measurement of the first voltage value (Uₓ₁) and deactivates said current again after said first time period (T1) has elapsed, and the analysis unit (20) is operated in such a way that the first measurement of the first voltage value (Uₓ₁) is carried out after a second time period (TW1) has elapsed, and after the first measurement a current is again impressed into the first surface (11) for a third time period (T2) by the current-activation means in order to exchange charge the first surface (11) again from its present potential (P0) to another potential (P2), and the measurement of the second voltage value (Uₓ₂) is carried out after a fourth time period (TW2) has elapsed,
**characterised in that** the first surface (11) is precharged before each measurement in the direction of that potential which lies further away from the most recently captured measured value.

## Revendications

1. Dispositif (100) d'entrée comprenant
une première surface (11) conductrice de l'électricité et une deuxième surface (12) conductrice de l'électricité, qui sont disposées à une distance (a) l'une de l'autre, la première surface (11) conductrice de l'électricité étant conformée en surface (13) de service, et étant telle qu'une pression (p) sur un point (P) de contact déforme la première surface (11) au point (P) de contact, de manière à ce que la première surface (11) et la deuxième surface (12) entrent en contact au point (P) de contact et créent un chemin (14) de courant passant par une partie de la première surface (11) en allant jusqu'au point (P) de contact et passant par une partie de la deuxième surface (12) à partir du point (P) de contact, comprenant en outre
• une unité (20) d'analyse, qui est conformée pour mesurer une valeur (Uₓ) de tension le long du chemin (14) de courant et en déterminer une valeur (x) de position,
• un moyen (30) de coupure de courant, qui est en liaison avec la première surface (11),
dans lequel l'unité (20) d'analyse et le moyen (30) de coupure de courant sont conformés de manière à être synchronisés entre eux par rapport à un instant d'une mesure de la valeur de tension de l'unité (20) d'analyse, dans lequel le moyen (30) de coupure de courant est conformé
pour, avant l'instant d'une mesure d'une valeur de tension, appliquer un courant dans la première surface (11), afin de faire passer la première surface (11) d'un premier potentiel (P0) électrique à un deuxième potentiel (P1) électrique, dans lequel l'unité (20) d'analyse est conformée pour mesurer, pour la valeur (Uₓ) de tension, une première valeur (Uₓ₁) de tension et une deuxième valeur (Uₓ₂) de tension et pour contrôler l'accord des résultats des deux valeurs (Uₓ₁, Uₓ₂) de tension,
dans lequel le moyen (30) de coupure de courant est conformé en outre
- pour, avant l'instant de la mesure de la première valeur (Uₓ₁) de courant, appliquer le courant dans la première surface (11) pendant une première durée (T1) et réinterrompre le courant après l'expiration de la première durée (T1),
- l'unité (20) d'analyse étant à cet effet conformée pour, après l'expiration d'une deuxième durée (TW1)
- effectuer la première mesure de la première valeur (Uₓ₁) de tension et en outre le moyen (30) de coupure de courant est conformé pour, après la première mesure, appliquer à nouveau un courant dans la première surface (11) pendant une troisième durée (T2) afin de faire passer la première surface (11) à nouveau de son potentiel (P0) en cours à un troisième potentiel (P2), l'unité (20) d'analyse étant à cet effet conformée en outre pour, après l'expiration d'une quatrième durée (TW2), effectuer la mesure de la deuxième valeur (Uₓ₂) de tension, **caractérisé en ce que** le moyen (30) de coupure du courant est conformé pour changer la charge de la première surface (11) avant chaque mesure en direction du potentiel, qui se trouve plus loin de la dernière valeur de mesure détectée.

2. Dispositif (100) d'entrée suivant la revendication 1, dans lequel le moyen (30) de coupure du courant a une source (21) limitée en courant et un moyen (31) de coupure.

3. Dispositif (100) d'entrée suivant l'une des revendications 1 ou 2, dans lequel le moyen (30) de coupure du courant peut être commandé et conformé pour, rapporté à un courant de changement de charge, adapter le courant, ou en inverser le sens, afin d'obtenir le changement de charge respectif de la première surface (11) de son potentiel (P0) en cours à un autre potentiel (P1, P2).

4. Dispositif (100) d'entrée suivant l'une des revendications 1 à 3, dans lequel le moyen (30) de coupure du courant est conformé de manière à avoir une limite de réglage inférieure et une limite de réglage supérieure, qui correspond au moins à la valeur de tension à déterminer la plus petite et respectivement la plus grande.

5. Dispositif (100) d'entrée suivant l'une des revendications 1 à 4, dans lequel l'unité (20) d'analyse est conformée en outre pour comparer entre elles la première valeur (Uₓ₁) de tension et la deuxième valeur (Uₓ₂) de tension et pour, s'il est constaté un écart pouvant être donné à l'avance entre les deux valeurs de tension l'une par rapport à l'autre, rejeter la mesure comme non valable.

6. Dispositif (100) d'entrée suivant l'une des revendications 1 à 5, dans lequel le moyen (30) de coupure du courant est conformé de manière à ne pas être complètement ouvert pendant la deuxième durée (TW1), mais à mettre à disposition un courant, qui s'oppose à une mesure défectueuse provoquée par des courants de fuite dans le dispositif.

7. Dispositif (100) d'entrée suivant l'une des revendications 1 à 6, dans lequel
• la première surface (11) conductrice de l'électricité a une première borne (1) et
une deuxième borne (2), qui sont disposées en opposition,
• la deuxième surface (12) conductrice de l'électricité,
a une troisième borne (3) et
une quatrième borne (4), qui sont disposées en opposition.

8. Procédé de détermination d'une position d'un point (P) de contact sur une surface (13) de service d'un dispositif (100) d'entrée, dans lequel le dispositif (100) d'entrée
a une première surface (11) conductrice de l'électricité et une deuxième surface conductrice de l'électricité, qui sont disposées à une distance (a) l'une de l'autre, la première surface (11) conductrice de l'électricité étant conformée en surface (13) de service et étant telle qu'une pression (p) sur un point (P) de contact déforme la première surface (11) au point (P) de contact, de manière à ce que la première surface (11) et la deuxième surface (12) entrent en contact au point (P) de contact et créent un chemin (14) de courant passant par une partie de la première surface (11) en allant jusqu'au point (P) de contact et passant par une partie de la deuxième surface (12) à partir du point (P) de contact, dans lequel on mesure, par une unité (20) d'analyse, une valeur (Uₓ) de tension le long du chemin (14) de courant et on en détermine une valeur (x) de position,
dans lequel en outre, on utilise un moyen (30) de coupure du courant, qui est relié à la première surface (11), pour appliquer un courant à la première surface (11) afin de faire passer la première surface (11) d'un premier potentiel (P0) électrique à un deuxième potentiel (P1) électrique, dans lequel l'unité (20) d'analyse et le moyen (30) de coupure du courant sont synchronisés l'un à l'autre, de manière à ce que, avant un instant d'une mesure de la valeur de tension de l'unité (20) d'analyse, le moyen (30) de coupure du courant applique le courant sur la première surface, dans lequel on mesure, par l'unité (20) d'analyse, une première valeur (Uₓ₁) de tension et une deuxième valeur (Uₓ₂) de tension et on contrôle l'accord des résultats des deux valeurs (Uₓ₁, Uₓ₂) de tension, dans lequel, par le moyen (30) de coupure du courant, on applique, avant l'instant de la mesure de la première valeur (Uₓ₁) de tension, le courant pendant une première durée (T1) à la première surface (11) et, après l'expiration de la première durée (T1), on interrompt à nouveau le courant, l'unité (20) d'analyse étant à cet effet mise en fonctionnement, de manière à effectuer, après l'expiration d'une deuxième durée (TW1), la première mesure de la première valeur (Uₓ₁) de tension et, après la première mesure, on applique à nouveau, par le moyen de coupure de courant, un courant à la première surface (11) pendant une troisième durée (T2), afin de faire passer la première surface (11) à nouveau de son potentiel (P0) en cours à un troisième potentiel (P2), après l'expiration d'une quatrième durée (TW2), on effectue la mesure de la deuxième valeur (Uₓ₂) de tension,
**caractérisé en ce que** on précharge la première surface (11) avant chaque mesure, en direction du potentiel, qui se trouve le plus loin de la dernière valeur de mesure détectée.
